# EUROPÄISCHE PATENTSCHRIFT

(11) **EP 1 941 196 B1**
(45) Veröffentlichungstag und Bekanntmachung des Hinweises auf die Patenterteilung: **13.10.2010**
(21) Anmeldenummer: 06806317.1
(22) Anmeldetag: 17.10.2006
(51) Int. Cl.: F16K 11/044

(54) **SANITÄRES UMSTELLVENTIL**
SANITARY REVERSING VALVE
SOUPAPE D'INVERSION SANITAIRE

(30) Priorität: 27.10.2005 DE 102005051379
(43) Veröffentlichungstag der Anmeldung: 09.07.2008
(73) Patentinhaber: Hansa Metallwerke AG, 70567 Stuttgart (DE)
(72) Erfinder: SCHMIDT, Heinz, 70567 Stuttgart (DE); ASSENMACHER, Bernd, 70597 Stuttgart (DE)
(74) Vertreter: Ostertag, Ulrich
(86) Internationale Anmeldenummer: PCT/EP2006/009981
(87) Internationale Veröffentlichungsnummer: WO 2007/048525

(56) Entgegenhaltungen:
- EP-A2- 0 937 927
- EP-A2- 1 061 299
- DE-A1- 19 542 748
- DE-U- 7 242 544

## Beschreibung

Die Erfindung betrifft ein sanitäres Umstellventil nach dem Oberbegriff des Patentanspruchs 1.

Bei bekannten Umstellventilen dieser Art, wie sie z. B. aus der DE 203 02 759 U1 bekannt sind, ist der Doppelventilkegel so federbelastet, dass er sich ohne Einwirkung äußerer Kräfte und ohne Wasserfluss an denjenigen ventilsitz anlegt, der die Wasserführung zur Brause beherrscht. Beim Öffnen des dem Umstellventil vorgelagerten Ventils, im allgemeinen eines Mischventils, fließt somit das Wasser zunächst über den Zulauf in das Gehäuse des Umstellventiles und dann zur Wanne. Durch einen axialen Zug am Umstellventil kann der Doppelventilkegel an den anderen Ventilsitz angelegt werden; die Wasserströmung wird sodann zur Brause geleitet. In dieser zweiten Position verbleibt der Doppelventilkegel aufgrund des auf ihn wirkenden Wasserdruckes so lange, bis der Benutzer durch Krafteinwirkung auf das Umstellglied die Kraft des Wasserdruckes überwindet. Bei diesen bekannten Umstellventilen hat sich als nachteilig herausgestellt, dass zur Umstellung unter Fließdruck des Wassers große Betätigungskräfte erforderlich sind und durch schnelle Umschaltbewegungen Druckschläge im Leitungssystem auftreten können.

Ein weiteres sanitäres Umstellventil der eingangs genannten Art ist aus der DE 195 42 748 A1 bekannt geworden. Dort werden Druckschläge dadurch vermieden, dass schnelle umschaltbewegungen mittels eines an der Ventilstange angeordneten Dämpfungskolbens, der in einer Zylinderbohrung geführt ist, verhindert werden.

Aus der EP 1 061 299 A2 geht ein ähnliches Umschaltventil hervor, welches jedoch keine Einrichtung zur Verhinderung einer zu raschen Umstellung vorsieht.

Ein weiteres Umschaltventil der eingangs genannten Art ist der EP 0 937 927 A2 zu entnehmen. Dort ist beim Brauseauslass ein Rückflussverhinderer angeordnet. Bei der Umstellung von Wannenbetrieb auf Brausebetrieb kann es in solchen Fällen zur Ausbildung eines Unterdrucks im Raum unmittelbar stromauf des Rückflussverhinderers kommen. Um dies zu vermeiden, wird in dieser Druckschrift ein Entlastungsventil vorgeschlagen, durch welches ein Nachströmen von Wasser in diesen Raum ermöglicht wird, so dass die erforderlichen Umstellkräfte bei dieser Richtung der Umstellung reduziert sind.

Den genannten Umschaltventilen gemeinsam ist, dass das Umschalten von Brausebetrieb nach Wannenbetrieb entweder nur bei abgestelltem Wasserzufluss möglich ist oder große Kräfte erfordert; beides erschwert die Benutzung dieser Umschaltventile.

Aufgabe der vorliegenden Erfindung ist es, ein sanitäres Umstellventil der eingangs genannten Art derart auszugestalten, dass die Betätigungskräfte reduziert sind.

Diese Aufgabe wird erfindungsgemäß gelöst durch ein sanitäres Umstellventil mit den im Patentanspruch 1 angegebenen Merkmalen.

Durch die erfindungsgemäß vorgesehene Druckangriffsfläche an dem Umstellglied wird also eine auf das Umstellglied und damit den Doppelventilkegel wirkende Gegenkraft zu derjenigen Druckkraft erzeugt, welche den Doppelventilkegel daran hindert, unter dem Einfluß der Federkraft in die Vorzugsposition zurückzukehren. Durch die richtige Abstimmung der Größen der Druckangriffsflächen an dem Umstellglied kann die Kraft, die zur Rückführung des Doppelventilkegels in die bevorzugte Position erforderlich ist, auf ein Minimum reduziert werden.

Der Strömungsweg führt bevorzugt durch das Umstellglied hindurch und umfasst hierzu beispielsweise eine durch das Umstellglied im wesentlichen in axialer Richtung hindurchgeführte Bohrung. Er ist auf diese Weise leicht herzustellen und vergrößert die Abmessungen des Umstellventil-Gehäuses nicht. Besonders günstig ist diejenige Ausführungsform der Erfindung, bei welcher der Strömungsweg durch eine Drossel führt. Die Drossel erzeugt eine geschwindigkeitsabhängige, die Bewegung des Umstellgliedes bremsende Kraft. Sie verhindert zu schnelle Umschaltbewegungen und das Auftreten damit verbundener Druckschläge.

Das Umstellglied kann ein Formteil umfassen, das an einem Endbereich als Kolben gestaltet ist, der in einem als Zylinderraum gestalteten Druckraum gleitet.

Ein Ausführungsbeispiel der Erfindung wird nachfolgend anhand der Zeichnung näher erläutert; es zeigen:
- Figur 1: einen Axialschnitt durch ein sanitäres Um- stellventil, wobei sich das Umstellglied in der Wannenausflußposition findet;
- Figur 2: einen Schnitt ähnlich der Figur 1, wobei sich jedoch das Umstellglied in der Brauseausfluß- position befindet.

Das in der Zeichnung dargestellte und insgesamt mit dem Bezugszeichen 1 gekennzeichnete sanitäre Umstellventil dient in bekannter Weise dazu, den von einem vorgelagerten Mischventil kommenden Mischwasserstrom wahlweise auf einen Wannenauslauf oder auf einen Brauseauslauf zu leiten. Es besitzt dazu ein Gehäuse 2. Bei diesem kann es sich um das Gehäuse einer Steuerkartusche handeln, die die Funktion des Mischventiles mit übernimmt, um das Gehäuse einer Sanitärarmatur oder um ein völlig isoliert stehendes Gehäuse, das ausschließlich für das Umstellventil 1 Funktion übernimmt.

Das Gehäuse 2 besitzt eine in der Zeichnung horizontal verlaufende, sich zur rechten Stirnseite des Gehäuses 2 öffnende und mehrfach abgestufte Bohrung 3, die kreisrunden Querschnitt aufweist. In die Bohrung 3 des Gehäuses 2 münden drei Kanäle 4, 5, 6. Über den als Zulauf dienenden Kanal 4 strömt von dem vorgelagerten Mischventil Mischwasser zu. Der als erster Auslauf dienende Kanal 5 führt zum Wannenauslauf, während der als zweiter Auslauf dienende Kanal 6 mit der Brause verbunden ist.

In die Bohrung 3 ist, in der Zeichnung von rechts, eine Baueinheit 7 eingeschoben, in der alle Funktionselemente des Umstellventiles 1 zusammengefasst sind. Diese Baueinheit 7 kann beim Einschieben in die Bohrung 3 bereits vormontiert sein. Sie umfasst einen äußeren Einsatz 8, dessen Grundform als "becherförmig" bezeichnet werden kann, wobei die Öffnung des Bechers in der Zeichnung nach links weist. Der in der Zeichnung rechts liegende Boden des Einsatzes 8 besitzt einen im Durchmesser etwas verjüngten Hals 8a, dessen Stirnseite von einer Durchgangsbohrung 9 durchstoßen wird. Der Einsatz 8 wird mit Hilfe zweier O-Ring-Dichtungen 10, 11 gegen die Wandung der Bohrung 3 abgedichtet. Sie liegen hierzu in Ringnuten (ohne Bezugszeichen) in der Mantelfläche des Einsatzes 8 ein.

Zwischen den die O-Ring-Dichtungen 10, 11 enthaltenden Ringnuten ist von außen her in die Mantelfläche des Einsatzes 8 eine weitere, verhältnismäßig breite Nut 12 eingearbeitet, derart, daß sich zwischen der Mantelfläche der Bohrung 3 und dem Grund der Nut 12 ein Ringraum 13 ergibt. Der oben schon erwähnte, zum Wannenauslauf führende Kanal 5 mündet in diesen Ringraum 13, wie im unteren Bereich der beiden Figuren zu erkennen ist. Der Ringraum 13 ist außerdem über mehrere fensterartige Öffnungen 14 mit dem Innenraum 15 des Einsatzes 8 verbunden.

In den Innenraum 15 des Einsatzes 8 ist, diesmal in der Zeichnung von links her, ein Bereich eines insgesamt mit dem Bezugszeichen 16 versehenen, beweglichen Umstellglieds eingeschoben. Das Umstellglied 16 besitzt in seinem in der Zeichnung linken Bereich einen Formkörper 16a, an den in Abstand von seinem in den Kanal 6 hineinragenden Ende ein radial sich nach außen erstreckender Flansch 16b angeformt ist.

Auf den zylindrischen Endbereich 16c des Formkörpers 16a ist ein ringförmiger Dichtkörper 16d aus elastischem Material aufgeschoben, der in bekannter Weise als Doppelventilkegel ausgebildet ist, also zwei gegenläufig konische Dichtflächen aufweist, wie dies nachfolgend noch deutlicher wird. Der Dichtkörper 16d liegt mit seiner in der Zeichnung rechten Stirnseite an der linken Stirnseite des Flansches 16b an. Er kann auf den Endbereich 16c des Formkörpers 16a aufgeschoben werden und wird danach durch einen Sprengring 17 in dieser Position gesichert.

Im in der Zeichnung rechts liegenden Bereich erweitert sich der Formkörper 16a zu einem Kolben 16e, der eine Umfangsnut (ohne Bezugszeichen) aufweist, in welcher ein Quad-Ring 18 einliegt. Der Quad-Ring 18 dichtet den Kolben 16e gegen die Mantelfläche eines Zylinderraumes 15b ab, der Teil des Innenraumes 15 des Einsatzes 8 ist.

Das Formteil 16 wird über seine gesamte axiale Länge von einer mehrfach abgestuften Axialbohrung 20 durchsetzt. Diese Axialbohrung 20 besitzt den größten Durchmesser in ihrem in der Zeichnung rechts liegenden, den Kolben 16e durchziehenden Bereich und weist in diesem Bereich größten Durchmessers ein Gewinde 21 auf. In das Gewinde 21 ist mit einem komplementären Außengewinde 23 ein im wesentlichen zylindrisches Betätigungsorgan 22 eingeschraubt, dessen Außendurchmesser in dem in der Zeichnung rechts von dem Außengewinde 23 liegenden Bereich dem dortigen Innendurchmesser der Axialbohrung 20 des Formteiles 16 entspricht. Das Betätigungsorgan 22 verläuft koaxial zum Einsatz 8 und durchsetzt die oben bereits erwähnte Bohrung 9 in der Stirnfläche des Halses 8a. Es endet außerhalb des Gehäuses 2 in einem schematisch angedeuteten Befestigungskopf 24, an welchem in bekannter Weise ein Betätigungsgriff befestigt werden kann. Ein in eine Nut der Mantelfläche des Betätigungsorganes 22 eingesetzter Sprengring 31 sichert den Zusammenhalt der vormontierten, den Einsatz 8 und das Umstellglied 16 umfassenden Baueinheit 7.

Zwischen einem in dem Innenraum des Halses 8a angeordneten, dort an einer Durchmesserstufe anliegenden Federteller 25 und einer durch eine Durchmesserabstufung der Axialbohrung 20 des Formteiles 16a entstandenen Ringfläche 32 erstreckt sich eine Druckfeder 26, welche in der Zeichnung das gesamte Umstellglied 16 gegenüber dem Einsatz 8 nach links zu schieben sucht.

Durch das Betätigungsorgan 22 ist ein Kanal 27 geführt, der in einen zunächst axial verlaufenden, mit der Axialbohrung 20 des Formteiles 16a kommunizierenden Bereich 27a und in einen radial verlaufenden Bereich 27b aufgeteilt ist, der in den Zylinderraum 15b mündet. Die Anordnung ist offensichtlich so, daß zwischen der äußersten, in der Zeichnung links liegenden Stirnfläche des Umstellgliedes 16 und dem Zylinderraum 15b ein Strömungsweg führt, über den Wasser in den Zylinderraum 15b einströmen und aus dem Zylinderraum 15b auch wieder ausströmen kann.

In ihrem in der Zeichnung ganz links liegenden Endbereich besitzt die Axialbohrung 20 des Formteiles 16a ihren kleinsten Durchmesser. Sie bildet auf diese Weise eine Drossel 28, deren Funktion weiter unten deutlich wird.

Die Kante, die sich durch die Einmündung des Kanals 6 in den Innenraum 3 des Gehäuses 2 bildet, dient als erster Ventilsitz für den Doppelventilkegel 16d. Als zweiter Ventilsitz des Umstellventiles 1 fungiert die Kante, mit welcher der Innenraum 15 in die in der Zeichnung links liegende Stirnfläche des Einsatzes 8 ausmündet.

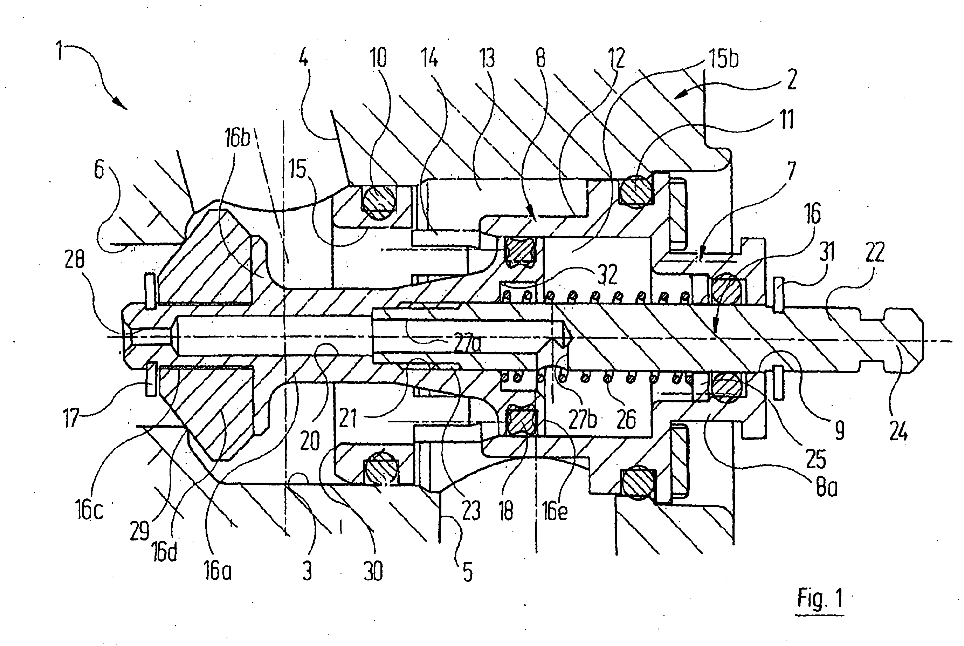

Das oben beschriebene Umstellventil 1 funktioniert wie folgt:
Zunächst sei angenommen, daß das dem Umstellventil 1 vorgelagerte Mischventil geschlossen ist, daß also alle inneren Wasserwege und Räume des Umstellventiles 1 wasserfrei sind. Dann sind diese inneren Wasserwege und Räume "drucklos", wobei unter diesem Begriff das Vorliegen des normalen Atmosphärendruckes zu verstehen ist. Die Druckfeder 26 hat das Umstellglied 16 so in der Zeichnung nach links gedrückt, daß der Doppelventilkegel 16d die in Figur 1 dargestellte Position einnimmt, in welcher er an dem ersten Ventilsitz 29 anliegt und den zur Brause führenden Kanal 6 verschließt.

Wird nunmehr das Mischventil geöffnet, so strömt das Mischwasser über den Kanal 4 in die Bohrung 3 des Gehäuses und weiter in den Innenraum 15 des Einsatzes 8 ein. Von dort gelangt das Mischwasser über die fensterartigen Öffnungen 14 in den Ringraum 13, sodann in den Kanal 5, von wo es zum Wannenauslauf strömt. Das Umstellglied 16 verbleibt dabei in der Position der Figur 1.

Wünscht der Benutzer nunmehr, vom Wannen- auf den Brausebetrieb überzugehen, so zieht er am Betätigungsorgan 22 das gesamte bewegliche Umstellglied 16 in Figur 1 nach rechts. Dabei entfernt sich der Doppelventilkegel 16d von dem ersten Ventilsitz 29 und legt sich schließlich mit der anderen kegelförmigen Dichtfläche an dem zweiten Ventilsitz 30 an. Nunmehr ist der Wasserstrom durch den Innenraum 15 des Einsatzes 8 zum Kanal 5 des Gehäuses 2 und damit zum Wannenauslauf versperrt. Statt dessen gibt der Doppelventilkegel 16d den zur Brause führenden Kanal 6 frei.

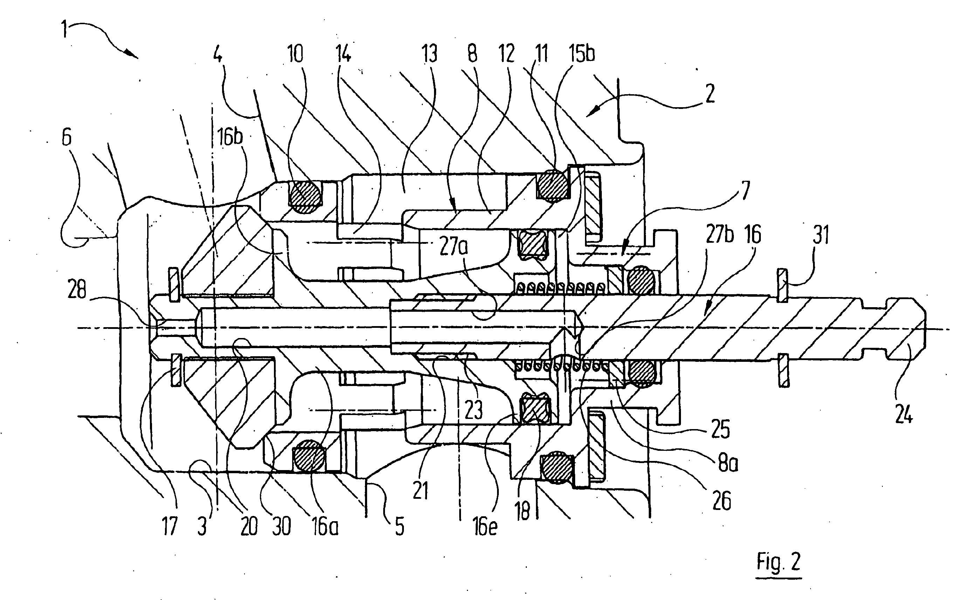

Jetzt wirkt der Wasserdruck in der Bohrung 3 des Gehäuses 2 auf die in der Zeichnung links liegenden Flächen des Formteiles 16a und insbesondere des Doppelventilkegels 16d. Dies führt zu einer resultierenden Kraft, die so groß ist, daß das Umstellglied 16 in der in Figur 2 dargestellten Position verbleibt, auch wenn der Benutzer nicht mehr am Betätigungsorgan 22 zieht.

Gleichzeitig kann Wasser über die Drossel 28 in die Axialbohrung 20 des Formteiles 16a und über die Bohrungsabschnitte 27a, 27b in den Zylinderraum 15b des Einsatzes 8 einströmen. Es baut innerhalb einer gewissen Zeit in dieser denselben Druck auf, der auch in der Bohrung 3 des Gehäuses 2 liegt. So entsteht ein Gegendruck, der auf die in der Zeichnung rechts liegenden, dem Wasserdruck ausgesetzten Flächen des Kolbens 16e wirkt und der oben erwähnten Druckkraft entgegengesetzt ist, welche das Umstellglied 16 nach rechts zu schieben und den Doppelventilkegel 16d in Anlage an dem zweiten Ventilsitz 30 zu halten sucht.

Die Größen der für die Entstehung dieser beiden entgegengesetzten Druckkräfte relevanten Flächen werden so gewählt, daß noch immer die Druckkraft etwas überwiegt, welche das Umstellglied 16 in die "Brauseposition" drückt.

Wenn nunmehr der Benutzer wieder in den Wannenbetrieb zurückkehren will, ohne zuvor das Mischventil abzustellen, so kann er auf das Betätigungsorgan 22 einen Druck ausüben. Mit nur sehr wenig Kraft gelingt es, den Doppelventilkegel 16d von dem zweiten Ventilsitz 30 abzuheben und wieder gegen den ersten Ventilsitz 29 anzulegen, so daß das Mischwasser nunmehr aus der Bohrung 3 des Gehäuses 2 wieder in den Innenraum 15 des Einsatzes 8 und von dort zum Wannenauslauf 5 strömen kann.

Die geschilderte Bewegung des Umstellgliedes 16 und damit auch des Kolbens 16e in der Zeichnung nach links wird von einer Wasserströmung begleitet, die durch die Drossel 28 in die Axialbohrung 20 des Formteiles 16d, in die Bohrungsabschnitte 27a, 27b des Betätigungsorganes 22 und in den Zylinderraum 15b des Einsatzes 8 führt. Der Querschnitt der Drossel 28 wird dabei so gewählt, daß eine rasche, zu Wasserschlägen führende Bewegung des Umstellgliedes 16 verhindert wird.

Auch die umgekehrte Bewegung des Umstellgliedes 16, die aus der in Figur 1 dargestellten in die in Figur 2 dargestellte Position führt, ist mit einer Wasserströmung verbunden, jedenfalls dann, wenn der Zylinderraum 15b aus einer vorhergehenden Benutzung des Umstellventiles 1 noch mit Wasser gefüllt ist. Dann muß nämlich das in den Zylinderraum 15b befindliche Wasser über den geschilderten, die Drossel 28 enthaltenden Wasserweg herausgedrückt werden. Durch die Drossel 28 wird also eine bei der Bewegung des Umstellgliedes 16 relevante Kraft eingeführt, die mit wachsender Bewegungsgeschwindigkeit wächst. Dadurch wird, wie erwähnt, einerseits die Entstehung von Wasserschlägen und andererseits ein "Flattern" des Umstellventiles 1 zuverlässig verhindert.

## Patentansprüche

1. Sanitäres Umstellventil mit
a) einem Gehäuse (2), das einen Zulauf (4) und zwei Ausläufe (5, 6) für Wasser aufweist;
b) einem Umstellglied (16), das zwischen zwei Positionen in axialer Richtung hin und her bewegbar ist und einen im Gehäuse (2) angeordneten Doppelventikkegel (16d) umfasst, der in einer ersten Position an einem ersten Ventilsitz (29) anliegt, der im Strömungsweg zwischen dem Zulauf (4) und dem ersten Auslauf (6) liegt, und in einer zweiten Position an einem zweiten Ventilsitz (30) anliegt, der im Strömungsweg zwischen dem Zulauf (4) und dem zweiten Auslauf (5) liegt;
c) einer im Gehäuse (2) angeordneten Federeinrichtung (26), welche das Umstellglied in die erste der beiden Positionen zu drücken sucht;
**dadurch gekennzeichnet, daß**
d) in dem Gehäuse (2) ein Druckausgleichsraum (15b) vorgesehen ist, der teilweise von einer an dem Umstellglied (16) vorgesehenen Druckausgleichsfläche begrenzt ist und in der zweiten Position über einen Strömungsweg (20, 27) mit einem Raum (3, 6) verbunden ist, in welchem ein Druck herrscht, der im wesentlichen dem Druck des zulaufenden Wassers entspricht,
wobei
e) die Druckausgleichsfläche am Umstellglied (16) so angeordnet ist, daß der an ihr anliegende Druck eine Kraft erzeugt, die in gleicher Richtung wie die Federeinrichtung (26) wirkt.

2. Sanitäres Umstellventil nach Anspruch 1, **dadurch gekennzeichnet, daß** der Strömungsweg (20, 27) durch das Umstellglied (16) führt.

3. Sanitäres Umstellventil nach Anspruch 2, **dadurch gekennzeichnet, daß** der Strömungsweg eine durch das Umstellglied (16) im wesentlichen in axialer Richtung hindurchgeführte Bohrung (20, 27) umfasst.

4. Sanitäres Umstellventil nach einem der Ansprüche 1 bis 3, **dadurch gekennzeichnet, daß** der Strömungsweg (20, 27) durch eine Drossel (28) führt.

5. Sanitäres Umstellventil nach einem der vorhergehenden Ansprüche, **dadurch gekennzeichnet, daß** das Umstellglied (16) ein Formteil (16a) umfasst, das an einem Endbereich als Kolben (16e) gestaltet ist, der in einem als Zylinderraum (15b) gestalteten Druckausgleichsraum gleitet.

## Claims

1. Sanitary changeover valve having
a) a housing (2), which has an inlet (4) and two outlets (5, 6) for water;
b) a changeover element (16), which is movable in axial direction to and fro between two positions and comprises a double valve cone (16d), which is disposed in the housing (2) and in a first position rests against a first valve seat (29) situated in the flow path between the inlet (4) and the first outlet (6) and in a second position rests against a second valve seat (30) situated in the flow path between the inlet (4) and the second outlet (5);
c) a spring device (26), which is disposed in the housing (4) and attempts to press the changeover element into the first of the two positions;
**characterized in that**
d) in the housing (2) a pressure compensation space (15b) is provided, which is partially delimited by a pressure compensation face provided on the changeover element (16) and which in the second position is connected by a flow path (20, 27) to a space (3, 6), in which a pressure corresponding substantially to the pressure of the inflowing water prevails,
wherein
e) the pressure compensation face on the changeover element (16) is disposed in such a way that the pressure applied thereto generates a force that acts in the same direction as the spring device (26).

2. Sanitary changeover valve according to claim 1, **characterized in that** the flow path (20, 27) extends through the changeover element (16).

3. Sanitary changeover valve according to claim 2, **characterized in that** the flow path comprises a bore (20, 27) that extends substantially in axial direction through the changeover element (16).

4. Sanitary changeover valve according to one of claims 1 to 3, **characterized in that** the flow path (20, 27) extends through a throttle (28).

5. Sanitary changeover valve according to one of the preceding claims, **characterized in that** the changeover element (16) comprises a shaped part (16a), which at one end region is fashioned as a piston (16e) that slides in a pressure compensation space fashioned as a cylinder space (15b).

## Revendications

1. Soupape d'inversion sanitaire comprenant
a) un carter (2) muni d'une arrivée (4) et de deux sorties (5, 6) d'eau ;
b) un organe inverseur (16) pouvant être animé de va-et-vient entre deux positions, dans le sens axial, et comportant un cône obturateur double (16d) qui est logé dans ledit carter (2), est en applique, dans une première position, contre un premier siège d'obturation (29) situé sur le trajet d'écoulement entre l'arrivée (4) et la première sortie (6), et est en applique, dans une seconde position, contre un second siège d'obturation (30) situé sur le trajet d'écoulement entre ladite arrivée (4) et la seconde sortie (5) ;
c) un dispositif à ressort (26), logé dans ledit carter (2) et visant à pousser ledit organe inverseur vers la première des deux positions ;
**caractérisée par le fait**
d) **qu'**une chambre (15b) d'équilibrage de pression, prévue dans ledit carter (2), est partiellement délimitée par une surface de compensation de pression ménagée sur ledit organe inverseur (16) et est reliée dans la seconde position, par l'intermédiaire d'un trajet d'écoulement (20, 27), à une chambre (3, 6) dans laquelle règne une pression correspondant pour l'essentiel à la pression de l'afflux d'eau,
sachant que
e) ladite surface de compensation de pression occupe, sur ledit organe inverseur (16), un emplacement tel que la pression, imposée à ladite surface, génère une force agissant dans la même direction que ledit dispositif à ressort (26).

2. Soupape d'inversion sanitaire selon la revendication 1, **caractérisée par le fait que** le trajet d'écoulement (20, 27) parcourt l'organe inverseur (16).

3. Soupape d'inversion sanitaire selon la revendication 2, **caractérisée par le fait que** le trajet d'écoulement comprend un alésage (20, 27) qui traverse l'organe inverseur (16) de part en part, pour l'essentiel dans le sens axial.

4. Soupape d'inversion sanitaire selon l'une des revendications 1 à 3, **caractérisée par le fait que** le trajet d'écoulement (20, 27) passe par un étranglement (28).

5. Soupape d'inversion sanitaire selon l'une des revendications précédentes, **caractérisée par le fait que** l'organe inverseur (16) englobe une pièce profilée (16a) revêtant, dans une région extrême, la forme d'un piston (16e) coulissant dans une chambre d'équilibrage de pression configurée en une chambre cylindrique (15b).
